Europäisches Patentamt

European Patent Office

Office européen des brevets

(19)

(11) Publication number: **0 206 686**
**B1**

# (12) EUROPEAN PATENT SPECIFICATION

(45) Date of publication of the patent specification:
16.08.90

(51) Int. Cl.⁵: **F16C 17/06**

(21) Application number: 86304565.4

(22) Date of filing: 13.06.86

(54) **Multi-deflection pad-type hydrodynamic bearing.**

(30) Priority: 17.06.85 US 745199

(43) Date of publication of application:
30.12.86 Bulletin 86/52

(45) Publication of the grant of the patent:
16.08.90 Bulletin 90/33

(84) Designated Contracting States:
DE FR GB IT SE

(56) References cited:
FR-A- 1 010 959
FR-A- 1 314 806
GB-A- 879 116
US-A- 1 991 461
US-A- 2 424 028
US-A- 4 227 752

(73) Proprietor: IDE, Russell Douglas, 28 Daniel Drive,
Coventry RI 02816(US)

(72) Inventor: IDE, Russell Douglas, 28 Daniel Drive,
Coventry RI 02816(US)

(74) Representative: Jack, Bruce James et al, FORRESTER &
BOEHMERT Widenmayerstrasse 4/I,
D-8000 Munchen 22(DE)

## Description

Hydrodynamic bearings, also sometimes known as swing pad bearings, have bearing pads mounted in such a way that they can move to permit the formation of a wedge-shaped film of lubricant between the relatively moving parts. Essentially the pad displaces with a swing-type motion about a center located in front of the pad surface, and bearing friction tends to open the wedge. In US-A 2 137 487 (Hall) there is shown a hydrodynamic movable pad bearing that develops its hydrodynamic wedge by sliding of its pad along spherical surfaces. In many cases the pad sticks and the corresponding wedge cannot be developed. In US-A 3 930 691 (Greene) the rocking is provided by elastomers that are subject to contamination and deterioration.

To mitigate this problem, there is shown in US-A 4 496 251 (Ide) a pad which deflects with web-like ligaments so that a wedge shaped film of lubricant is formed between the relative moving parts. The webs in this disclosure are flexible in the direction of motion but are relatively stiff in directions generally 90° to the direction of motion and thus cannot adjust to misalignment of the opposing member or unequal loading among pads. This limits the application of this configuration. FR-A 1 314 806 (Dresser Industries) discloses an arrangement similar in principle.

The present invention relates to a bearing in which the pad, provided by a face member, is spaced from the support member by at least one leg-like ligament which provides flexibility in three directions. Thus the invention consists in the hydrodynamic bearings defined in the claims.

To provide flexibility in the plane of motion, the leg-like ligaments are angled inward to define a conical shape with its above in front of the pad surface of the face member. Each leg-like ligament preferably has a section modulus that is relatively small in the direction of desired motion to permit compensation for misalignments. Dog legs, or reverse bends may permit movement of the pad surface in the direction of loading to compensate for unequal loads. While for normal loads the leg-like ligaments may be arranged symmetrically about the face member, there are instances in which the loads are very light and it is therefore desirable to have the ligaments non-symmetrical such that the pressure and friction moments will act to confirm a converging wedge. An expedient way to provide a non-symmetrical ligament support arrangement is to eliminate one or several of the legs. In the extreme case, only one leg would remain. Another method is to shift the location of the cone apex forward on the pad such that one or several of the legs are located closer to the pad surface center. For the non-symmetrical support structure it is understood that the bearing pads are uni-directional rather than bi-directional.

Testing of the symmetrical configuration of the present invention where the pads are bi-directional, indicates exceptional load carrying capability and high speed stability. One test in low viscosity lubricants, such as water or light turbine oil, showed load carrying capacity exceeding 13 800 kPa (2000 psi). Also because pad movement is accomplished by small deflections of the ligaments, the pads cannot bind or stick. Other movable pad designs rely on sliding or rolling elements to move the pad to form the hydrodynamic wedge and are prone to contamination and binding. In the case where the pads must operate in high temperature, the pads and legs may be manufactured of high temperature materials and so are not limited by the elastomer or grease lubrication found in the Greene or Hall type movable pad designs. A final advantage to the present invention is that while it provides high performance over a broad range of operating conditions, the construction costs may be very low for high volume manufacture by utilizing injection molding in plastic or sintered metal or ceramic for the bearing material. Operation in gas is also feasible.

In order that the invention may be more readily understood, and further features thereof may be appreciated, embodiments of apparatus constructed in accordance with the invention will now be described, by way of example, with reference to the accompanying drawings, in which:

FIGURE 1 is a plan view of a typical thrust bearing having a plurality of pads made in accordance with the invention mounted thereon;

FIGURE 2 is a side elevational view thereof;

FIGURE 3 is an elevational view of one of the pads;

FIGURE 4 is a sectional view taken on lines 4-4 of Figure 2;

FIGURE 5 is an end view of a journal bearing made in accordance with the teachings of the invention;

FIGURE 6 is a sectional view taken on lines 6-6 of Figure 5;

FIGURE 7 is a diagrammatic view showing the action of the pad;

FIGURE 8 is a side elevational view of a non-symmetrical pad; and

FIGURE 9 is a side elevational view of a non-symmetrical pad having a still further configuration.

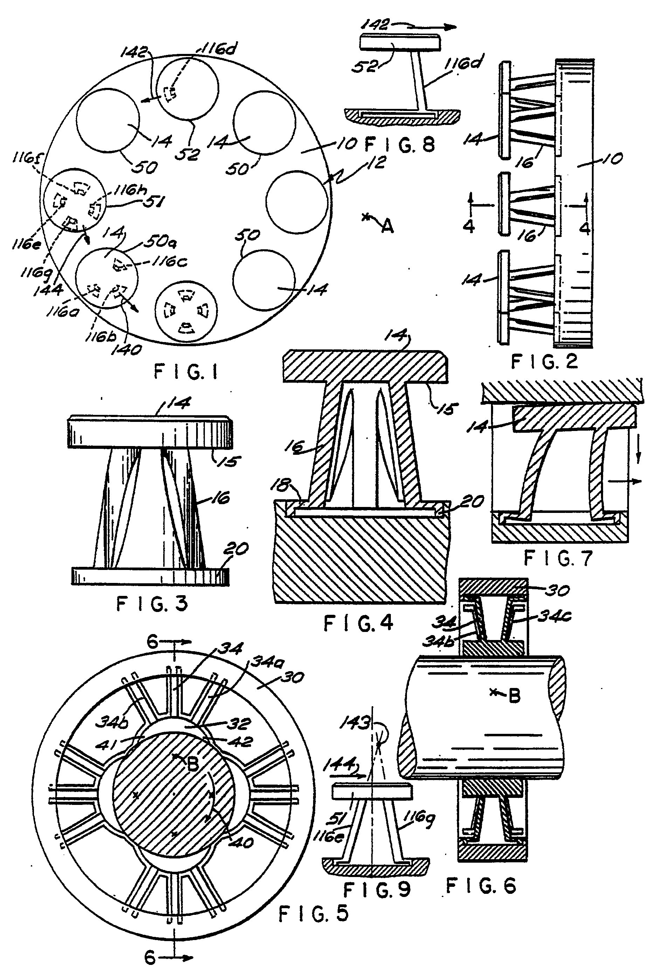

The structure shown in the drawings comprises a support member 10, upon which there are press fitted a plurality of stool-like bearing pads generally designated 12. The pads as shown are substantially circular in form, and as seen in greater detail in Figures 3 and 4, have a supporting planar face member 14. To support the face members, there extends from the rear 15 of each a plurality of leg-like ligaments 16 which are each a truncated portion of a hollow cone having its apex above the surface of the member 14: that is, the ligaments extend at angles to the pad face and to each other such that imaginary extensions thereof will meet at a point A in front of the pad face. The lower parts of the ligaments connect with a base in the form of a continuous rim 20 through dog-leg portions 18 that extend radially of the rim, the latter as shown extending axially from the dog-leg portions 18. The rim 20 is press fitted to the support member 10. The preferable construction of each of the ligaments 16 is one in which the cross-section is designed so that in the direction of desired motion or flexibility, the modulus is small. This can be readily appreciated if, for example, with a rectangular section, the formula for either the modulus $bh^3/12$ or section modulus $bh^2/6$ is used (b = breadth, h = height).

In Figures 5 and 6 there is illustrated a journal utilizing a similar construction to that described above, which consists of a support member in the form of a casing 30 into which is fitted a plurality of bearing pads such as 32, each of which has a plurality of leg-like ligaments 34, 34a, 34b and 34c. In the particular embodiment illustrated there are six symmetrical leg-like ligaments, all of which are directed toward an imaginary point B as seen in Figures 5 and 6. In this journal form of bearing, if it is assumed that there is motion in the direction of the arrow 40, the friction forces which are developed will tend to rock the pads so that the leading edge 41 will move radially outward, while a trailing edge 42 will move radially inward to develop a wedge of fluid between the journal and the pad. As will be understood by those skilled in the art, the movement is minute but is sufficient to create the necessary wedge.

Referring back to Figure 1, as has been mentioned above, there are situations where the loads are essentially light and in such cases there may be difficulty in the pad deflecting to create the wedge. To overcome this difficulty, the pad may be made with asymmetrical legs. For example, as seen with the pad designated 50a in Figure 1, there are illustrated by dotted lines, legs 116a, 116b and 116c. If we assume therefore, for the moment, that the direction of the part being supported is as seen by arrow 140, this will then allow the leading edge of the pad to move downward into the plane of the paper as seen in the drawing and create the necessary wedge angle.

In addition to the concept of using three leg-like ligaments, which legs are spaced about the pad on a constant radius from the center of the pad face, there are other ways of achieving uni-directional bearings. Note, for example, in Figure 9, and also the pad 51 in Figure 1, the leg-like ligament arrangement where the point of intersection of the extension of the ligaments above the pad face is at a point 143 that is ahead of the center line of the pad, it being understood that the motion of the surface being supported is as depicted by the arrow 144 in Figure 1 and Figure 9. When viewed in plan, as seen in Figure 1, it is apparent that the two legs 116e and 116f are closer to the pad center than they would be in a symmetrical situation.

The extreme case of providing a non-symmetrical leg-like ligament is illustrated in Figure 8, an arrangement that will only work if the loads are extremely light. In this situation, there is maintained only one leg 116d supporting a pad 52, the leg being illustrated as being in a position so that the intersection thereof with pad face is ahead of the center of the pad face, it being further understood that the motion of the part being supported is represented by the arrow 142 as illustrated both in the plan view of Figure 1 and in Figure 8.

In many cases the machining of the parts may not be extremely accurate, and one can envision a situation where the pad faces of the plurality of pads may not be all planar, particularly in the illustration of Figures 1 and 2. When this occurs the dog leg portions 18 of each of the leg-like ligaments will compensate for that inequality and allow the pad faces to pick up the loads which otherwise would be unequal on the faces. A diagram of the action that occurs is seen in the diagrammatic sketch of Figure 7 which is greatly enlarged and out of proportion to illustrate the function. This illustrates the rocking of the pad to develop a thin wedge-shaped film of lubricant at the interface between the part supported and the upper surface of the pad.

## Claims

1. A hydrodynamic bearing for supporting an opposing moving part, comprising a support member (10, 30) and a plurality of bearing pads (12) each including a base (20) supported by the support member (10, 30), a face member (14, 32, 51, 52) and at least one ligament (16, 34, 116) attaching the face member to the base (20) to permit the face member to rock under friction and pressure loads to provide for a wedge-shaped lubricant film between the face member and the opposing moving part, characterized in that the or each said ligament (16, 34, 116) is leg-like and comprises a truncated portion of a hollow cone which has its apex above the surface of the bearing pad face member (14, 32, 51, 52), the ligament having a sectional modulus that is relatively small in the direction of motion of the moving part and at right angles thereto, to permit rocking of the face member in these directions.

2. A bearing according to claim 1, further characterized in that the base (20) of each bearing pad (12) comprises at least one dog-leg portion (18) extending radially to a said leg-like ligament, and a rim (20) that extends axially from said dog-leg portion.

3. A bearing according to claim 1 or 2, further characterized in that the bearing pads (12) are formed separately from the support member (10, 30).

4. A bearing according to claim 3, further characterized in that the bearing pads (12) are press fitted into the support member (10, 30).

5. A bearing according to any one of claims 1 to 4 further characterized in that each bearing pad includes a plurality of said leg-like ligaments.

6. A bearing according to claim 5, further characterized in that the plurality of leg-like ligaments are equi-spaced about the periphery of the said hollow cone.

7. A bearing according to claim 5, further characterized in that the leg-like ligaments are non-symmetrically disposed about the periphery of the hollow cone.

8. A bearing according to any preceding claim, further characterized in that the or each said leg-like ligament is non-symmetrically disposed with respect to the centre of its associated bearing pad.

## Patentansprüche

1. Hydrodynamisches Lager zum Halten eines gegenüberliegenden, sich bewegenden Teiles, das folgendes umfaßt: ein Halteteil (10, 30) und mehrere Lagersegmente (12), die jeweils eine von dem Halteteil (10, 30) gehaltene Basis (20) umfassen, ein Stirnteil (14, 32, 51, 52) und mindestens ein Ligament (16, 34, 116), welches das Stirnteil an der Basis (20) befestigt, um es dem Stirnteil zu erlauben, unter Reibung und Drucklasten zu schwingen, um einen keilförmigen Schmierfilm zwischen dem Stirnteil und dem gegenüberliegenden beweglichen Teil auszubilden, dadurch gekennzeichnet, daß das oder jedes Ligament (16, 34, 116) beinartig ist und einen stumpfen Abschnitt in Form eines hohlen Konus mit dem Scheitelpunkt oberhalb der Oberfläche des Lagersegmentstirnteiles (14, 32, 51, 52) aufweist, wobei das Ligament einen Schnittmodul hat, der in der Richtung der Bewegung des sich bewegenden Teiles und in rechten Winkeln dazu relativ gering ist, um Schwingungen des Stirnteiles in diesen Richtungen zu erlauben.

2. Lager nach Anspruch 1, ferner dadurch gekennzeichnet, daß die Basis (20) eines jeden Lagersegmentes (12) mindestens einen Abschnitt (18) mit einem Absatz, der sich radial zu dem beinartigen Ligament erstreckt, und einen Rand (20) aufweist, der sich axial von dem Abschnitt mit dem Absatz erstreckt.

3. Lager nach Anspruch 1 oder 2, ferner dadurch gekennzeichnet, daß die Lagersegmente (12) separat von dem Halteteil (10, 30) ausgebildet sind.

4. Lager nach Anspruch 3, ferner dadurch gekennzeichnet, daß die Haltesegmente (12) in Form einer Preßpassung in das Halteteil (10, 30) eingepaßt sind.

5. Lager nach einem der Ansprüche 1 bis 4, ferner dadurch gekennzeichnet, daß jedes Lagersegment mehrere der beinartigen Ligamente umfaßt.

6. Lager nach Anspruch 5, dadurch gekennzeichnet, daß die mehreren beinartigen Ligamente um die Peripherie des hohlen Konus herum gleich beabstandet sind.

7. Lager nach Anspruch 5, ferner dadurch gekennzeichnet, daß die beinartigen Ligamente unsymmetrisch um die Peripherie des hohlen Konus herum angeordnet sind.

8. Lager nach einem der vorangehenden Ansprüche, ferner dadurch gekennzeichnet, daß das oder jedes beinartige Ligament unsymmetrisch bezüglich des Mittelpunktes des ihm zugeordneten Lagersegmentes angeordnet ist.

**Revendications**

1. Palier hydrodynamique pour supporter une partie mobile opposée, comprenant un élément de support (10, 30) et une multitude de patins de palier (12), chacun comportant une base (20) maintenue par l'élément de support (10, 30), un élément de face (14, 32, 51, 52) et au moins un ligament (16, 34, 116) fixant l'élément de face à la base (20) pour permettre à l'élément de face de basculer sous l'effet des charges de frottement et de pression pour fournir un film de lubrifiant en forme de cale entre l'élément de face et la partie mobile opposée, caractérisé en ce que le ligament ou chaque ligament (16, 34, 116) a la forme d'un jambage et comporte une partie tronquée d'un cône creux qui a son sommet au-dessus de la surface de l'élément de face (14, 32, 51, 52) du patin de palier, le ligament ayant un module sectionnel qui est relativement petit dans le sens de déplacement de la partie mobile et est perpendiculaire à celui-ci, afin de permettre le basculement de l'élément de face dans ces directions.

2. Palier selon la revendication 1, caractérisé en outre en ce que la base (20) de chaque patin de palier (12) comprend au moins une partie (18) en patte de chien qui s'étend radialement vers undit ligament en forme de jambage, et un pourtour (20) qui s'étend radialement à partir de la partie en patte de chien.

3. Palier selon la revendication 1 ou 2, caractérisé en outre en ce que les patins de palier (12) sont formés en étant séparés de l'élément de support (10, 30).

4. Palier selon la revendication 3, caractérisé en outre en ce que les patins de palier (12) sont montés à ajustage serré dans l'élément de support (10, 30).

5. Palier selon l'une quelconque des revendications 1 à 4, caractérisé en outre en ce que chaque patin de palier comprend une multitude de ligaments en forme de jambage.

6. Palier selon la revendication 5, caractérisé en outre en ce que la multitude de ligaments en forme de jambage sont espacés de la même distance sur la périphérie du cône creux.

7. Palier selon la revendication 5, caractérisé en outre en ce que les ligaments en forme de jambage sont disposés de façon non symétrique sur la périphérie du cône creux.

8. Palier selon l'une quelconque des revendications précédentes, caractérisé en outre en ce que le ligament ou chaque ligament en forme de jambage est disposé de façon non symétrique par rapport au centre de son patin de palier associé.

EP 0 206 686 B1

F I G. 1

F I G. 2

F I G. 3

F I G. 4

F I G. 5

F I G. 6

F I G. 7

F I G. 8

F I G. 9